# FASCICULE DE BREVET EUROPEEN

(11) **EP 0 999 948 B1**
(45) Date de publication et mention de la délivrance du brevet: **25.02.2004**
(21) Numéro de dépôt: 98941488.3
(22) Date de dépôt: 29.07.1998
(51) Int. Cl.: B60K 41/20, F02D 11/10, F02D 31/00

(54) **PROCEDE DE COMMANDE D'UN MOTEUR A COMBUSTION INTERNE**
VERFAHREN ZUR STEUERUNG EINER BRENNKRAFTMASCHINE
METHOD FOR CONTROLLING AN INTERNAL COMBUSTION ENGINE

(30) Priorité: 01.08.1997 FR 9709855
(43) Date de publication de la demande: 17.05.2000
(73) Titulaire: Renault Agriculture, 78141 Vélizy-Villacoublay (FR)
(72) Inventeur: BAUDOIN, Patrice, F-92620 Asnières (FR); OLIVIER, Bernard, F-92600 Asnières (FR)
(74) Mandataire: Srour, Elie
(86) Numéro de dépôt international: PCT/FR1998/001687
(87) Numéro de publication internationale: WO 1999/006238

(56) Documents cités:
- DE-A- 4 206 291
- US-A- 3 667 020
- US-A- 4 244 335
- US-A- 5 480 364

## Description

La présente invention concerne un procédé de commande d'un moteur à combustion interne. La présente invention concerne plus particulièrement la commande d'un moteur à combustion interne équipant un tracteur agricole.

Un procédé selon le préambule de la revendication 1 est connu de document DE-A-4 206 291.

Il est également connu de mettre à disposition du conducteur d'un tracteur agricole, deux accélérateurs distincts pour piloter la charge du moteur, un premier accélérateur sous la forme d'une pédale et un deuxième accélérateur sous la forme d'une manette. La pédale d'accélérateur est classiquement ramenée automatiquement à la position de repos par un ressort de rappel tandis que la manette d'accélérateur ne présente, elle, pas de mécanisme de retour automatique à la position de repos.

La position de ces deux accélérateurs distincts est transmise à un dispositif électronique de contrôle de la puissance fournie par le moteur qui commande alors ce dernier en fonction de la plus grande des deux informations. Le boîtier électronique de contrôle agit alors directement sur la quantité de carburant injectée à travers la commande des injecteurs ou encore de la pompe à carburant.

Cette disposition présente l'inconvénient de ne pas prendre en compte l'action du conducteur sur la ou les commandes de freinage du véhicule de façon que la puissance fournie par le moteur soit réduite, annulée ou rendue négative (frein moteur) dès que le conducteur freine et ceci indépendamment de la position des accélérateurs.

L'objet de la présente invention est donc de pallier ces inconvénients en proposant un procédé de commande du moteur qui tient compte à la fois de l'action du conducteur sur les freins et de la position des accélérateurs.

Grâce à cette invention selon la revendication 1, lors par exemple d'un freinage sur route à vitesse élevée et alors que le conducteur aura omis de ramener la manette d'accélérateur à la position repos, les freins n'auront plus à lutter contre la puissance d'avancement délivrée par le moteur. Il en résulte donc un freinage plus efficace, une distance d'arrêt réduite, un moindre échauffement des freins et donc une usure plus faible de ceux-ci.

Selon une autre caractéristique du procédé de commande d'un moteur à combustion interne objet de l'invention, quelles que soient les positions respectives de la pédale et de la manette d'accélérateur, l'enfoncement de la pédale de frein entraîne une limitation de l'alimentation en carburant jusqu'à ce que le régime moteur atteigne le régime de ralenti.

Selon une autre caractéristique du procédé de commande d'un moteur à combustion interne objet de l'invention, la limitation de l'alimentation en carburant demeure tant que la pédale de frein est sollicitée.

Selon une autre caractéristique du procédé de commande d'un moteur à combustion interne objet de l'invention, la limitation de l'alimentation en carburant est opérée tant que la pédale de frein est sollicitée et tant que la vitesse du véhicule demeure supérieure à la vitesse de seuil donnée.

Selon une autre caractéristique du procédé de commande d'un moteur à combustion interne objet de l'invention, lorsque qu'en début de freinage la vitesse du véhicule dépasse la vitesse de seuil donnée, alors la limitation de l'alimentation en carburant est maintenue tant que la pédale de frein est sollicitée même lorsque la vitesse du véhicule devient inférieure à ladite vitesse de seuil.

Selon une autre caractéristique du procédé de commande d'un moteur à combustion interne objet de l'invention, après l'enfoncement de la pédale de frein, la manette d'accélérateur est déconnectée de la commande du moteur et le moteur est alors seulement commandé par la pédale d'accélérateur et ce, tant que le conducteur n'a pas ramené la manette d'accélérateur à la position de repos.

On comprendra mieux les buts, aspects et avantages de la présente invention, d'après la description donnée ci-après d'un mode de réalisation de l'invention appliqué à un moteur quatre temps à allumage commandé, ce mode de réalisation étant donné à titre d'exemple non limitatif, en se référant au dessin annexé, dans lequel :
la figure 1 est une vue schématique d'un tracteur agricole
la figure 2 est un algorithme décrivant la mise en oeuvre du procédé selon l'invention.

La présente invention concerne plus particulièrement les véhicules à moteur comportant deux accélérateurs distincts commandant la charge du moteur tels que par exemple les tracteurs agricoles.

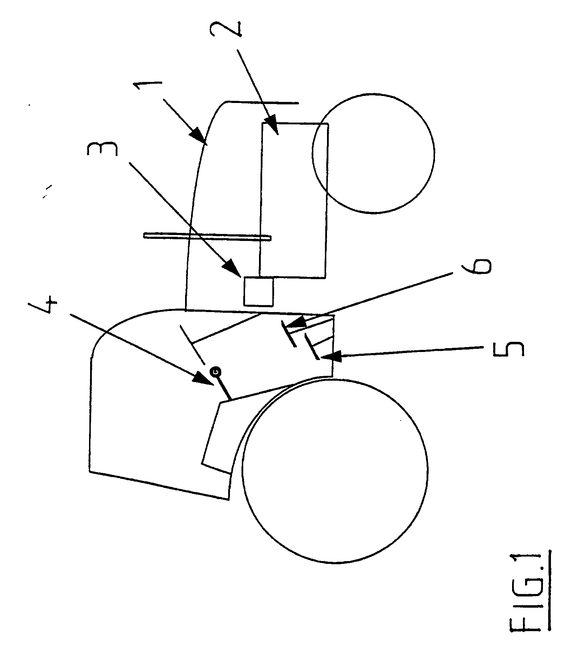

Le tracteur agricole référencé 1 à la figure 1 comporte classiquement un moteur à combustion interne 2 du type à allumage par compression. Ce moteur 2 possède un boîtier électronique de contrôle 3 qui commande selon des stratégies adaptées l'alimentation en carburant du moteur à partir notamment de la position de deux accélérateurs distincts. Ce boîtier 3 agit directement sur l'ouverture des injecteur de carburant dans le cas d'un circuit de type "common rail" ou bien encore sur le débit de la pompe à carburant dans le cas d'une pompe à commande électronique.

Les deux accélérateurs agissant sur la commande de la charge du moteur 2 sont constitués par la pédale 5 manoeuvrée au pied par le conducteur tandis que le second accélérateur est constitué par la manette 4 manoeuvrée à la main par le conducteur. La pédale 5 est ramenée automatiquement à la position de repos par un mécanisme de rappel adapté tandis que la manette 4, elle, est dépourvue de tout mécanisme de rappel. Le déplacement de chacun des deux accélérateurs 4 et 5, et les positions atteintes sont transmises au boîtier électronique de contrôle 3 qui commande alors l'alimentation en carburant en fonction de la plus grande de ces deux valeurs.

Selon l'invention, l'alimentation en carburant est également déterminée par le boîtier électronique en fonction de. l'enfoncement de la pédale de frein 6. La pédale de frein 6 en question agit sur les freins dits "de service" par opposition aux freins de secours ou de parking qui sont commandés par d'autres moyens.

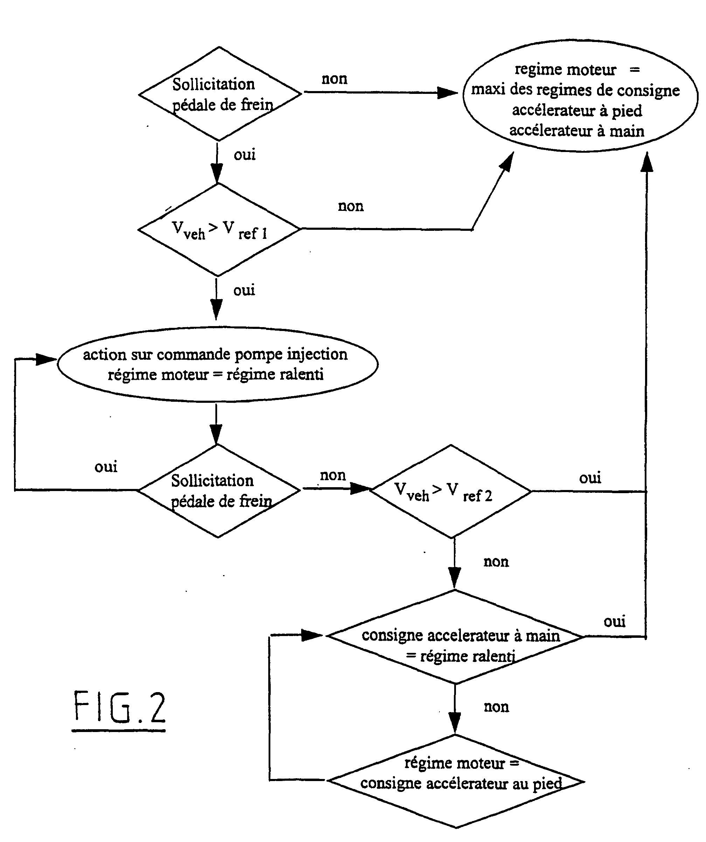

En se reportant à la figure 2, on a décrit un algorithme décrivant la prise en compte par le système électronique de commande des informations freinage d'une part et accélération d'autre part.

La première étape consiste à reconnaître la position de la pédale de frein. Si la pédale est au repos, la stratégie utilisée est la stratégie classique consistant à commander le moteur à partir de la plus grande des positions atteintes par la pédale 5 et par la manette 4 d'accélérateur.

Si par contre la pédale de frein sollicitée par le conducteur est enfoncée et quitte sa position de repos, on effectue alors un test sur la vitesse du véhicule. L'information sur la vitesse du véhicule est déterminée soit par un dispositif approprié soit en multipliant le régime moteur par le rapport de transmission.

Au dessous d'une vitesse de seuil Vref1, la sollicitation de la pédale de frein n'est pas prise en compte pour modifier la stratégie de commande du moteur. Cela a notamment pour fonction d'éviter qu'en vitesse d'avancement lente du véhicule 1, toute action sur la pédale de frein 6 n'oblige à déplacer la manette 4 en position de repos comme cela va être expliqué ci-dessous et donc à annuler temporairement le régime de consigne du moteur 2 et donc la vitesse d'avancement du véhicule 1 donnés par la position de la manette 4.

Par ailleurs, lorsque le véhicule 1 se déplace à faible vitesse, la puissance d'avancement délivrée par le moteur est alors faible et son incidence sur le freinage est minime.

on pourra par exemple choisir comme valeur de Vref1, 10 km/h de façon à englober la quasi-totalité des allures de travail du véhicule.

Si la vitesse du véhicule est supérieure à la vitesse de seuil Vrefi, l'alimentation en carburant est réduite voire stoppée jusqu'à ramener le régime moteur au régime ralenti de façon à réduire la puissance du moteur et donc améliorer le freinage et ce, quelles que soient les positions des deux accélérateurs et notamment quelle que soit la position de la manette 4.

Cette action sur l'alimentation en carburant est opérée tant que la pédale de frein est sollicitée, même si la vitesse du véhicule devient inférieure à la vitesse Vref1 et donc éventuellement jusqu'à l'arrêt complet du véhicule.

Lorsque la pédale de frein est relâchée et revient au repos, on effectue alors un second test sur la vitesse du véhicule.

Si la vitesse du véhicule est supérieure à une vitesse de seuil Vref2, l'alimentation en carburant est à nouveau commandée de façon classique à partir de la plus grande des positions atteintes par la pédale 5 et par la manette 4 d'accélérateur.

Dans le cas par contre où la vitesse du véhicule 1 est inférieure à la vitesse de seuil Vref2, on contrôle alors la position de la manette 4.

Si la position de la manette 4 est au repos, on retrouve alors la commande classique du moteur à partir de la plus grande des positions atteintes par la pédale 5 et par la manette 4 d'accélérateur. Le conducteur peut alors à nouveau choisir le régime de consigne du moteur et donc la vitesse d'avancement du véhicule en agissant sur la manette 4.

Si la position de la manette 4 n'est pas au repos, on commande alors le moteur, non pas, à partir de la plus grande des positions atteintes par la pédale 5 et par la manette 4 d'accélérateur, mais uniquement par la position donnée par la pédale d'accélérateur 5 et ce jusqu'à temps que la manette 4 soit ramenée dans sa position de repos ce qui permet alors de retrouver un fonctionnement classique où le moteur est alors commandé à partir de la plus grande des positions atteintes par la pédale 5 et par la manette 4 d'accélérateur.

Cette stratégie a pour objet d'éviter que le véhicule après avoir fortement ralenti, ne ré-accélère brutalement pour atteindre la vitesse de consigne donnée par la position de la manette 4 dans le cas où cette dernière n'a pas été ramenée au repos au cours du freinage. Cette manette 4 est donc déconnectée de la commande du moteur tant que le conducteur ne l'a pas ramenée à la position de repos et ce n'est qu'une fois la manette 4 ramenée dans sa position de repos que celle-ci redevient active sur la commande du moteur.

La valeur Vref2 sert donc à évaluer l'intensité du freinage subit par le véhicule. On peut, par exemple, prendre pour Vref2 10 km/h de moins que la vitesse maximum autorisée sur route, ainsi si la vitesse maximum autorisée sur route est de 40 km/h alors Vref2 vaut 30 km/h.

Si donc la vitesse du véhicule après freinage est supérieure à Vref2, cela signifie que le freinage n'a pas été très important et donc que le véhicule peut réaccélérer automatiquement dans le cas où la manette 4 est restée dans sa position active. Si par contre, la vitesse du véhicule après freinage est inférieure à Vref2, cela signifie que le freinage a été important et donc qu'il est plus prudent d'interdire la réaccélération automatique du véhicule si la manette 4 est restée dans sa position active, a moins que le conducteur ne le demande expressément en ramenant au préalable cette manette en position de repos avant de la remettre dans sa position active de commande du moteur.

Bien entendu, l'invention n'est nullement limitée au mode de réalisation décrit et illustré qui n'a été donné qu'à titre d'exemple.

De même, il est possible de prendre en compte la position de plusieurs organes de freinage et non pas seulement celle de la seule pédale 6, notamment lorsqu'il existe plusieurs commandes de freinage.

## Revendications

1. Procédé de commande d'un moteur à combustion interne (2) équipant un véhicule (1) et coopérant avec une manette (4) et une pédale (5) d'accélérateur, par lequel est déterminé la quantité de carburant à injecter, la quantité de carburant étant déterminée par les positions respectives de la pédale (4) et de la manette (5) d'accélérateur est corrigée en fonction de la position d'au moins un organe de freinage (6) du véhicule (1) **caractérisé en ce que** l'enfoncement de l'organe de freinage (6) n'est pris en compte que lorsque la vitesse du véhicule dépasse une vitesse de seuil donnée (Vref1).

2. Procédé de commande d'un moteur à combustion interne selon la revendication 1, **caractérisé en ce que** quelles que soient les positions respectives de la pédale (5) et de la manette (4) d'accélérateur, l'enfoncement de l_{'}organe de freinage (6) entraîne une limitation de l'alimentation en carburant jusqu'à ce que le régime moteur atteigne le régime de ralenti.

3. Procédé de commande d'un moteur à combustion interne selon la revendication 2, **caractérisé en ce que** la limitation de l'alimentation en carburant demeure tant que l'organe de freinage (6) est sollicitée.

4. Procédé de commande d'un moteur à combustion interne selon la revendication 1, **caractérisé en ce que** la limitation de l'alimentation en carburant est opérée tant que l'organe de freinage(6) est sollicité et tant que la vitesse du véhicule demeure supérieure à la vitesse de seuil donnée (vref1).

5. Procédé de commande d'un moteur à combustion interne selon la revendication 1, en ce que la limitation de l'alimentation en carburant est maintenue tant que l'organe de freinage(6) est sollicité même lorsque la vitesse du véhicule devient inférieure à ladite vitesse de seuil (Vref1) .

6. Procédé de commande d'un moteur à combustion interne selon l'une quelconque des revendications 1 à 5, **caractérisé en ce que** lors du relâchement de l'organe de freinage (6), et si la vitesse du véhicule dépasse une deuxième vitesse de seuil donné (Vref2) la manette (4) d'accélérateur est déconnectée de la commande du moteur (2) et le moteur (2) est seulement commandé par la pédale (5) d'accélérateur tant que le conducteur n'a pas ramené ladite manette (4) d'accélérateur à la position de repos.

## Patentansprüche

1. Verfahren zur Steuerung eines Verbrennungsmotors (2), der ein Fahrzeug (1) ausrüstet und mit einem Handgashebel (4) und einem Gaspedal (5) zusammenwirkt, durch welches die Menge an einzuspritzendem Kraftstoff bestimmt wird, wobei die Kraftstoffmenge bestimmt wird durch die jeweiligen Positionen des Gaspedals (4) und des Handgashebels (5) korrigiert wird abhängig von der Position von mindestens einem Bremselement (6) des Fahrzeugs (1), **dadurch gekennzeichnet, dass** das Drücken des Bremselements (6) nur berücksichtigt wird, wenn die Geschwindigkeit des Fahrzeugs eine gegebene Grenzgeschwindigkeit (Vref1) überschreitet.

2. Verfahren zur Steuerung eines Verbrennungsmotors gemäß Anspruch 1, **dadurch gekennzeichnet, dass** welche die jeweiligen Positionen des Gaspedals (5) und des Handgashebels (4) auch seien, das Drücken des Bremselements (6) eine Begrenzung der Kraftstoffversorgung bewirkt, bis die Drehzahl des Motors die Drehzahl des Lehrlaufs erreicht

3. Verfahren zur Steuerung eines Verbrennungsmotors gemäß Anspruch 2, **dadurch gekennzeichnet, dass** die Begrenzung der Kraftstoffversorgung anhält, solange das Bremselement (6) gedrückt wird.

4. Verfahren zur Steuerung eines Verbrennungsmotors gemäß Anspruch 1, **dadurch gekennzeichnet, dass** die Begrenzung der Kraftstoffversorgung ausgeführt wird, solange das Bremselement (6) gedrückt wird und solange die Geschwindigkeit des Fahrzeugs größer als die gegebene Grenzgeschwindigkeit (Vref1) bleibt.

5. Verfahren zur Steuerung eines Verbrennungsmotors gemäß Anspruch 1, **dadurch gekennzeichnet, dass** die Begrenzung der Kraftstoffversorgung beibehalten wird, solange das Bremselement (6) gedrückt wird, sogar wenn die Geschwindigkeit des Fahrzeugs kleiner als die Grenzgeschwindigkeit (Vref1) wird.

6. Verfahren zur Steuerung eines Verbrennungsmotors gemäß einem der Ansprüche 1 bis 5, **dadurch gekennzeichnet, dass** beim Loslassen des Bremselements (6), und wenn die Geschwindigkeit des Fahrzeugs eine zweite gegebene Grenzgeschwindigkeit (Vref2) übersteigt, der Handgashebel (4) von der Steuerung des Motors (2) abgekoppelt wird und der Motor (2) nur durch das Gaspedal (5) gesteuert wird, solange der Fahrer den Handgashebel (4) nicht in die Ruheposition zurückgeführt hat.

## Claims

1. A control method for an internal combustion engine (2) fitted in a vehicle (1) and cooperating with an accelerator lever (4) and an accelerator pedal (5), via which the quantity of fuel to be injected is determined, the quantity of fuel being determined by the respective positions of the accelerator lever (4) and the accelerator pedal (5) and corrected as a function of the position of at least one braking member (6) of the vehicle (1), **characterised in that** the depression of the braking member (6) is taken into account only when the vehicle speed exceeds a given threshold speed (Vrefl).

2. A control method for an internal combustion engine as claimed in claim 1, **characterised in that** whatever the respective positions of the accelerator pedal (5) and lever (4), the depression of the braking member (6) causes a limitation of the fuel supply until the engine speed reaches idling speed.

3. A control method for an internal combustion engine as claimed in claim 2, **characterised in that** the fuel supply continues to be limited as long as the braking member (6) is actuated.

4. A control method for an internal combustion engine as claimed in claim 1, **characterised in that** the fuel supply is limited as long as the braking member pedal (6) is actuated and as long as the speed of the vehicle remains higher than the given threshold speed (Vrefl).

5. A control method for an internal combustion engine as claimed in claim 1, **characterised in that** the fuel supply continues to be limited as long as the braking member (6) is actuated even when the speed of the vehicle drops below the threshold speed (Vrefl).

6. A control method for an internal combustion engine as claimed in any one of claims 1 to 5, **characterised in that** during release of the braking member (6), and if the vehicle speed exceeds a second given threshold speed (Vref2), the accelerator lever (4) is disconnected from the engine (2) control and the engine (2) is controlled only by the accelerator pedal (5) until the driver has returned the accelerator lever (4) to the rest position.
